# EUROPÄISCHE PATENTSCHRIFT

(11) **EP 0 893 288 B1**
(45) Veröffentlichungstag und Bekanntmachung des Hinweises auf die Patenterteilung: **23.04.2003**
(21) Anmeldenummer: 98890206.0
(22) Anmeldetag: 15.07.1998
(51) Int. Cl.: B60G 3/20

(54) **Querlenker Radaufhängung für Automobile**
Suspension with lateral arm for autocars
Suspension à bras latéral pour automobiles

(30) Priorität: 21.07.1997 AT 123897
(43) Veröffentlichungstag der Anmeldung: 27.01.1999
(73) Patentinhaber: Krizek, Franz Chr., Dipl.-Ing., 1120 Wien (AT)
(72) Erfinder: Krizek, Franz Chr., Dipl.-Ing., 1120 Wien (AT)

(56) Entgegenhaltungen:
- EP-A- 0 096 372
- US-A- 4 515 390
- US-A- 5 306 034
- PATENT ABSTRACTS OF JAPAN vol. 013, no. 247 (M-835), 8. Juni 1989 & JP 01 056214 A (MAZDA MOTOR CORP), 3. März 1989

## Beschreibung

Die Erfindung betrifft eine Radaufhängung für KFZ, im besonderen für Rennfahrzeuge, bei der bei Kurvenfahrt die Räder einer Achse keine Sturzänderung erhalten oder das kurvenäußere Rad einer Achse einen negativen und das kurveninnere Rad einen positiven Sturz selbsttätig einnehmen.

Stand der Technik ist bei ausgeführten Straßen- und Rennfahrzeugen, daß bei Kurvenfahrt die Räder sich in die gleiche Richtung wie der Wagenkasten bei Kurvenfahrt neigen, was in Richtung positiven Sturzes bei den kurvenäußeren Rädern und in Richtung negativen Sturzes bei kurveninneren Rädem geht, was in beiden Fällen die Reifenhaftung während der Kurvenfahrt verringert. Ausnahmen sind hier, wenn auch meist nur experimentell ausgeführt, Fahrzeuge, bei denen aktive Aufhängungsteile, wie Hydraulikzylinder in Abhängigkeit von Signalen, den Wagenkasten oder den Räder eine gewünschte Neigung oder Sturz während der Kurvenfahrt geben und die heute kaum mehr verwendeten Pendel- und Starrachsen.
Die kinematische Auslegung dieser Lösungen unterscheidet sich wesentlich von der in dieser Beschreibung angeführten Erfindung.

US 5 306 034 betrifft eine unabhängige Radaufhängung, eine Doppelquerlenker Aufhängung, bei der der obere Quenlenker starr mit dem Radträger verbunden ist.

Erwähnenswert in diesem Zusammenhang ist das Patent DE 642 192 C1 von Daimler Benz aus dem Jahre 1932, wo durch möglichst geringen Abstand des Wagenkastenschwerpunktes von der Querschwingachse des Fahrzeuges eine große Rollsteifheit erzielt werden soll. Die Räder der Hinterachse, eine Pendelachse, nehmen, wenn der Schwerpunkt höher als die Querschwingachse liegt, negativen Sturz am kuvenäußeren und positiven Sturz am kurveninneren Rad ein. Dies wird aber erkauft mit dem für Pendelachsen typisch sehr hoch liegenden Rollzentrum, das sehr starke Spuränderungen beim Einfedern und bei Kurvenfahrt ergibt, was zu unruhigem Fahrzeugverhalten und Überschlagsneigung, durch "Steigen" der Hinterachse, also zu extrem schlechter Straßenlage führt. Das Steigen der Achse entsteht dadurch, daß die während der Kurvenfahrt auftretende Seitenkraft am kurvenäußeren Rad ein Moment um das sehr hoch liegende Reaktionszentrum, das ident ist mit dem Rollzentrum ist, bewirkt. Hier tritt dann auch positiver Sturz beim kurvenäußeren Rad auf. Zusätzlich verursacht das hohe Rollzentrum und damit verbundene Rollsteifheit starke Gewichtsverlagerung von Innenzum Außenrad, was die Haftung der Achse verringert. Aus diesem Grund wird diese Aufhängung nicht mehr ausgeführt. Die Querschwingachse soll nach heutigen Erkenntnissen möglichst nahe der Fahrbahn sein, was beim Erfindungsgegenstand gegeben ist, der an Vorder- und Hinterachse gleichzeitig verwendet werden kann.

Die US 4 515 390A zeigt eine Chassisausführung, die sicherstellen soll, daß die Räder eines Fahrzeuges möglichst senkrecht zur Fahrbahnebene während der Kurvenfahrt bleiben. Dies wird dadurch erreicht, daß bei Kurvenfahrt der Wagenkasten um eine Achse rotiert die im vorderen und hinteren Subchassis gelagert ist, und mit diesen über Federn und Dämpfer verbunden ist. Die Vorspannung der Federn wird Mittels probieren so eingestellt, daß bei Kurvenfahrt das Subchassis und daran angelenkte Räder, möglichst in ihrer ursprünglichen Lage zur Fahrbahn bleiben um die Radhaftung zu maximieren. Die Radaufhängung ist eine Doppelquerlenkeraufhängung mit gleich langen parallelen Lenkern. Dieses Patent hat daher nichts mit dem Erfindungsgegenstand zu tun.

Es gibt Entwicklungen, daß der Wagenkasten bei Kurvenfahrt sich nicht nach außen neigt, sondern sich in die Kurve legt, wie bei EP, 163 382, A1, wo ein komplexes Gestänge sicherstellen soll, daß auch die Sturzänderung der Räder beeinflußt wird. Eine äußerst komplizierte, aufwendige Angelegenheit die schwer zu realisieren, da der Schwerpunkt unter dem Drehpunkt um die Radaufhängung liegen muß, was in der Praxis, aufgrund des großen Raumbedarfes wegen des hochliegenden Schwerpunktes schwierig. Es wird aber nicht berücksichtigt, daß die Seitenkraft in Kurven nicht nur ein Moment bewirkt, das den Wagenkasten in die Kurve legt, sondern auch in dem Drehpunkt angreift und ein weiteres Moment um das Rollzentrum der Radaufhängung bewirkt. Eine wesentlich anderer Radaufhängungstyp als der Erfindungsgegenstand, der ein Rollzentrum in der Fahrbahn oder in Bodennähe besitzt um den sich Wagenkasten und Radaufhängung bei Kurvenfahrt drehen.

Ein weiteres Patent US, 3 181 883, A (Kolbe) erwähnt Wagenkästen die sich in die Kurve legen, wobei es auch für Fahrzeuge gilt die in Kurven sich nach außen neigen. Dieses Patent beschäftigt sich mit elastischen Verbindungsgliedem zwischen Wagenkasten und Radaufhängung, welche die Wagenneigung besser kontrollieren und damit die Radaufhängung in Kurven. Die erwähnten Radaufhängungen sind Stand der Technik. Eine Ähnlichkeit zum Erfindungsgegenstand ist damit nicht gegeben.

Patent EP 96 372 A2 von Nissan behandelt die Lenkung von Rädern mit bekannten Radaufhängungen, wo ein Verbindungsglied oder ein Teilstück der Aufhängung, das in der Länge verstellbar ist, das Lenken der Räder bewirkt. Die Längenverstellung erfolgt mittels Hydraulik- oder Preßluftservos. Es handelt sich hier um eine Lenkung von Rädem, und nicht um die Verstellung des Radsturzes und die erfolgt nicht selbsttätig, sondern mittels Servo.

Bislang fehlt daher eine Radaufhängung, die die angestrebte Wirkung erreicht.

Die erfindungsgemäße Radaufhängung erzielt dies dadurch, daß ein teleskopierender Querlenker drehbar oder ein starrer Querlenker mittels , einer langen Gleitführung, einer Gleitdrehführung oder mittels eines elastischen Gliedes am Wagenkasten angelenkt ist, und am äußeren Ende dieser Querlenker ein Radträger starr befestigt ist. Der Radträger kann in der Verlängerung der Achse des ersten Querträgers oder unter einem Winkel zu diesem sich unter- oder oberhalb des ersten Querlenkers erstrecken. An dem Radträger ist ein zweiter Querlenker drehbar angelenkt, der am anderen Ende am Wagenkasten gelenkig befestigt ist.

Wo die Normale auf die Achse des teleskopierenden ersten Querlenkers, oder die Normale auf die Tangente an die Bahn des inneren Endes des starren ersten Querlenkers, sich mit der Achse des zweiten Querlenkers trifft, ist der Momentanpol dieses Gestänges, um den sich das Rad, das am Radträger mittels einer Lagerung befestigt ist, bewegt. Verbindet man den Momentanpol mit der Mitte der Reifenaufstandsfläche auf der Fahrbahn mittels einer Geraden und schneidet die Gerade mit der senkrechten Achse des KFZ, dann erhält man das Rollzentrum, um das sich der Wagenkörper bei Kurvenfahrt dreht. Das Rollzentrum soll sich aus fahrdynamischen Gründen möglichst in Fahrbahnnähe oder direkt in der Fahrbahnebene befinden.

Wenn man den Punkt, der sich ergibt, wenn man die Achse des ersten Querlenkers mit der Hochachse des Rades schneidet, mit dem Rollzentrum verbindet und über diese Strecke einen Halbkreis errichtet, gilt folgendes:
1. Liegt der innere Anlenkpunkt des ersten Querlenkers auf dem Halbkreis, dann tritt während Kurvenfahrt keine Sturzänderung der Räder dieser Achse auf.
2. Liegt der Anlenkpunkt des ersten Querlenkers am Wagenkasten innerhalb des Halbkreises, dann wird bei Kurvenfahrt das kurvenäußere Rad negativen und das kurveninnere Rad einer Achse positiven Sturz einnehmen.
3. Liegt der Anlenkpunkt des ersten Querlenkers außerhalb des Halbkreises, dann wird bei Kurvenfahrt positiver Sturz am kurvenäußeren Rad und am kurveninneren Rad negativer Sturz auftreten.

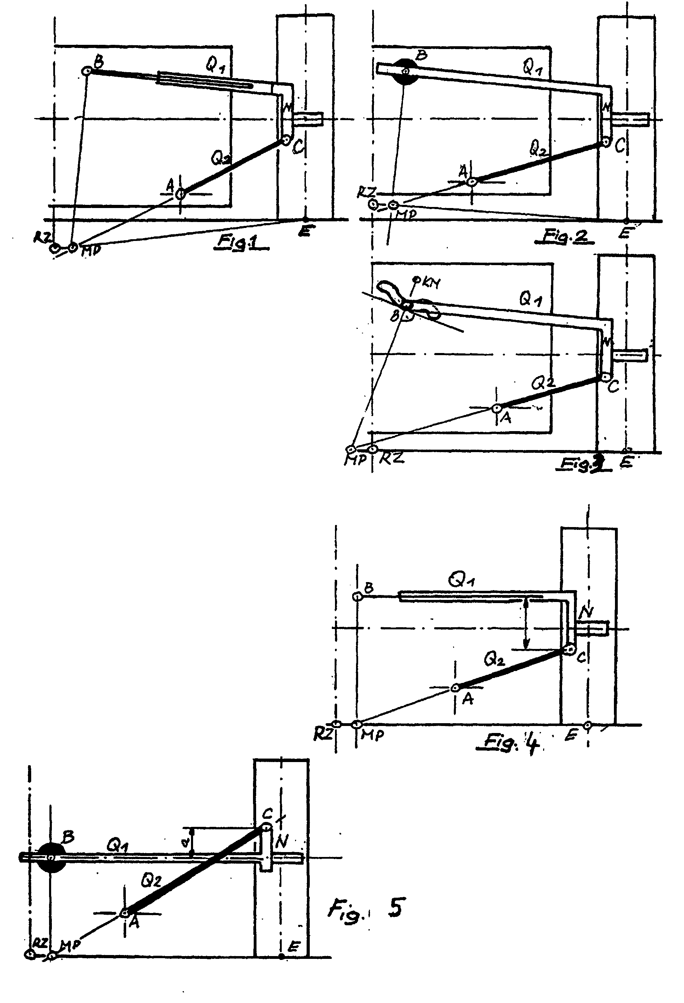

Fig.1 zeigt den ersten Querlenker Q1 teleskopierend und den Radträger N unter einem Winkel zu Q1 nach unten abgewinkelt Querlenker Q1 ist in B am Wagenkasten angelenkt, während Querlenker Q2 in A am Wagenkasten und in C am Radträger N drehbar gelagert ist. Verlängert man die Achse von Q2 und schneidet sie mit der Normalen auf den Querlenker Q1 durch den Punkt B dann erhält man den Momentanpol MP der Radaufhängung. Verbindet man den Momentanpol MP mit dem Radaufstandsmittelpunkt E und schneidet die dadurch erhaltene Gerade mit der senkrechten Wagenkörperachse, dann erhält man das Rollzentrum RZ, um das sich der Wagenkörper bei Kurvenfahrt dreht Diese Konstruktion gilt auch für die folgenden Figuren zwei, drei und vier.

In Fig.2 ist Querlenker Q1 im Punkt B am Wagenkörper in einer Gleitdrehführung gelagert, die auch durch eine elastische Lagerung mit einem entsprechend geformter Silentblock für geringe Bewegungen ersetzt werden kann. Der Radträger N ist nach unten abgewinkelt.

Fig. 3 zeigt Anlenkung des ersten Querlenkers Q1 mit einer Kurvenbahn am Wagenkasten wobei der Momentanpol MP auf der Normalen zur Tangente an die Gleitkurve im Punkt B liegt, dort wo sich die Normale mit der verlängerten Achse des zweiten Querlenkers Q2 schneidet. KM ist der Kurvenmittelpunkt eines Kreises an die Kurvenbahn.

Figuren 4 und 5 zeigen die möglichen Anordnungen des Radträgers N. Der Radträger kann einen Winkel zur Achse des Querlenker Q1 einnehmen. In Fig. 4 ist der Radträger nach unten abgewinkelt und hat die Länge a. Fig. 5 zeigt einen nach oben weisenden Radträger der Länge a, wobei sich hier die beiden Querlenker Q1 und Q2 kreuzen. Das Rollzentrum ergibt sich auch hier wie oben angeführt.

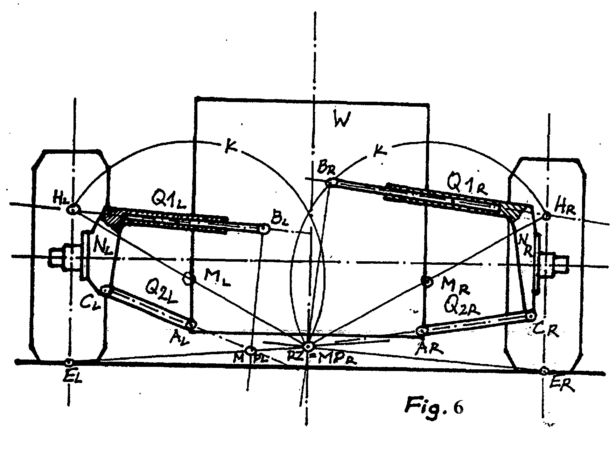

Fig.6 zeigt den Halbkreis K über die Verbindungsstrecke zwischen den Schnittpunkt H der Achse des ersten Querlenkers Q1 mit der Radhochachse und dem Rollzentrum RZ. Wobei hier die Querlenker Q1 teleskopierend sind. Der Index R oder L bei den Buchstaben, die die Elemente bezeichnen, steht für Links oder Rechts der Fahrzeughochachse. Liegt der Anlenkpunkt B des ersten Querlenkers Q1 auf der Halbkreislinie K, wie im Bilde rechts, dann wird beim Rollen des Wagenkörpers W um das Rollzentrum RZ das Rad R keine Winkeländerung erfahren, d. h. daß das. Rad keinen Sturz bekommt. Liegt der Anlenkpunkt B innerhalb des Halbkreises K wie in Fig.6 links, dann nimmt das Rad R einen negativen Sturz beim Rollen des Wagenkörpers nach links und positiven Sturz beim Rollen nach rechts ein.

## Patentansprüche

1. Radaufhängung für ein Kraftfahrzeug, insbesondere für Rennfahrzeuge,
- bei der bei Kurvenfahrt die Räder einer Achse selbsttätig keine Sturzänderung gegenüber Geradeausfahrt erhalten
**oder**
- bei der bei Kurvenfahrt das kurvenäußere Rad negativen und das kurveninnere Rad positiven Sturz selbsttätig gegenüber Geradeausfahrt einnehmen,
wobei
- ein erster teleskopierenden Querlenker (Q1) vorhanden ist, dessen Anlenkpunkt (B) direkt am Wagenkörper (W) angelenkt ist
**oder**
- ein erster starrer Querlenker (Q1) vorhanden ist, dessen Anlenkpunkt (B) mittels eines elastischen Gliedes **oder** einer Gleitdrehführung **oder** einer Kurvenbahn am Wagenkörper (W) angelenkt ist,
**und**
- ein zweiter Querlenker (Q2) vorhanden ist, der an einem inneren Ende am Wagenkörper (W) in einem Punkt (A) und an einem äußeren Ende an einem Radträger (N) in einem Punkt (C) drehbar angelenkt ist, wobei der Radträger (N) in der Verlängerung des ersten Querlenkers (Q1) oder abgewinkelt zu dem ersten Querlenker starr mit diesem verbunden ist,
- wobei der Anlenkpunkt (B) auf **oder** innerhalb eines Halbkreises (K) liegt,
-- dessen Mittelpunkt (M) in der Mitte der Strecke liegt, die den Schnittpunkt (H) von Reifenhöchachse und Längsachse des Querlenkers (Q1) mit einem Rollzentrum (RZ) **des Wagenkörpers (W)** verbindet, und
-- dessen Radius gegeben ist durch die Strecke zwischen dem Schnittpunkt (H) und dem Mittelpunkt (M).

2. Radaufhängung nach Anspruch 1, **dadurch gekennzeichnet, daß** der Radträger (N) sich oberhalb **oder** unterhalb der Raddrehachse befindet und die beiden Querlenker (Q1 und Q2) verbindet.

## Claims

1. Wheelsuspension for a motorvehicle, especially for racing cars, where when cornering the wheels of one axle do not get a change of camber on themself in comparison to driving in a straight line,
or
where when cornering the comer outside wheel assumes on itself negative camber and the comer inside wheel assumes on itself positive camber in comparison to driving in a straight line,
whereby
a first telescoping wishbonerod (Q1) exists, whose connecting pivot point (B) is linked directly to the car body (W)
or
a rigid wishbonerod (Q1) exists, whose connecting point (B) is linked via an elastic member, or a sliding and pivoting point, or via a curved slide to the car body.
and
a second wishbonerod (Q2) exists which is at one end pivoted at the car body (W) in point (A) and at the outer end to the wheel carrier (N) in point (C) whereby the wheel carrier (N) is fixed either as a straight extension to the first wishbonerod (Q1) or angled to the first whisbonerod (Q1) to which it is linked rigidly, whereby pivot point (B) is on or within a semicircle (K) whose center (M) is placed in the middle of of the straight line which connects the point (H), of the intersection of the wheel vertical axis with the axis of the wishbone (Q1), with the roll center (RZ) of the carbody (W), and whose radius is given through the straight line between the point of intersection (H) and the centerpoint (M).

2. Wheelsuspension according to claim 1, whereby the wheel carrier (N) is either above or below the wheel axis and connects both wishbones (Q1 and Q2).

## Revendications

1. Suspension de roue pour un véhicule à moteur, en particulier pour un véhicule de compétition
- n'ayant pas pour effet automatique une modification du carrossage lorsque le véhicule passe du déplacement en ligne droite à la négociation d' un virage
ou bien
- ayant pour effet, lorsque le véhicule passe du déplacement en ligne droite à la négociation d'un virage, un carrossage négatif pour la roue extérieure et un carrossage positif pour la roue intérieure
comportant un premier bras transversal télescopique (Q 1) dont le point d' ancrage (B) s'articule directement sur la carrosserie (W)
ou bien
comportant un premier bras transversal télescopique (Q 1) dont le point d' ancrage (B) s'articule sur la carrosserie (W) par le moyen d'un élément élastique ou bien par le moyen d'un guidage à glissement ou bien d'un chemin incurvé
et
- ayant en plus un deuxième bras transversal (Q2) dont l'extrémité intérieure pivote sur un point d'ancrage (A) situé sur la carrosserie (W) tandis que l'extrémité extérieure pivote sur un point d'ancrage (C) situé sur un support de roue (N), ce dernier étant relié rigidement au bras transversal (Q1) soit comme prolongation droite de celui-ci soit comme un branchement,
- le point d'ancrage (B) étant situé soit sur la périphérie soit à l' intérieur d'un demi-cercle (K)
- dont le centre (M) est situé au milieu d'une ligne droite reliant le point d'intersection (H) entre l'axe vertical du pneumatique et l'axe longitudinal du bras transversal (Q1) d'une part au centre de roulis (RZ) de la carrosserie (W) d'autre part, et
- dont le rayon est égal à la distance entre le point d'intersection (H) et le centre (M).

2. Suspension de roue conformément à la revendication numéro 1 et caracrtérisée par le fait que le support de roue (N) est situé soit en dessus soit en dessous de l'axe de l'essieu et relie les deux bras transversaux (Q1 et Q2) entre eux.
